# EUROPEAN PATENT APPLICATION

(11) **EP 4 280 361 A2**
(43) Date of publication of application: **22.11.2023**
(21) Application number: 23171003.9
(22) Date of filing: 02.05.2023
(51) Int. Cl.: H01M 50/213, H01M 50/264, H01M 50/503, H01M 50/507, H01M 50/524, H01M 50/583

(54) **RETAINING COMPONENT, BATTERY ASSEMBLY AND END STRUCTURE FOR BATTERY ASSEMBLY**

(30) Priority: 20.05.2022 CN 202210557151
(71) Applicant: Techtronic Cordless GP, Anderson, SC 29621 (US)
(72) Inventor: LEE, Hei Man, Kwai Chung (CN); WANG, Nan, Kwai Chung (CN); WANG, Li Feng, Dongguan City (CN)
(74) Representative: Novagraaf Group

(57) **Abstract**

The present invention provides a retaining component, a battery assembly and an end structure. The retaining component of the present invention is configured to fix multiple cells at the top and/or bottom of the multiple cells, and a hole open to the outside is provided in the retaining component at a position corresponding to a fusible part, so that the fusible part is exposed. According to the present invention, the fusible part can be exposed to the outside at the opening; this provides space for melt-through of the fusible part. For example, when melt-through occurs due to current flow through the fusible part of a collector component, the structure of the opening allows the fusible part to melt through fully, thereby protecting the circuit.

## Description

### Technical Field

The present invention relates to the field of batteries, in particular to a retaining component. The present invention further relates to a battery assembly and an end structure thereof.

### Background Art

In battery assemblies commonly seen on the market today, end retaining components for cells are generally designed to completely cover the ends of all of the cells, and usually also to completely cover the collector components at the ends of the cells. Fusible sections functioning as fuses on the collector components are enclosed by the retaining components made of plastic for example; consequently, when the fusible section is required to melt through as quickly as possible to protect the circuit, the fusible section's ability to completely melt through cannot be guaranteed. For example, as a result of being enclosed by the retaining component, the fusible section might give rise to an intermittent connection even if it melts through in the cramped, closed space, such that the fusible section is unable to protect the circuit.

Thus, there is a need to provide a retaining component, a battery assembly and an end structure, to at least partially solve the abovementioned problem.

### Summary of the Invention

An objective of the present invention is to provide a retaining component, a battery assembly and an end structure. The retaining component of the battery assembly is provided with an opening corresponding to a fusible part of a collector component, so that the fusible part can be exposed to the outside at the opening; this provides space for melt-through of the fusible part. When melt-through occurs due to current flow through the fusible part of the collector component, the structure of the opening allows the fusible part to melt through fully, thereby protecting the circuit.

According to one aspect of the present invention, a retaining component for a battery assembly is provided, the battery assembly comprising multiple cells and a collector component positioned at the top and/or bottom of the multiple cells, a fusible part connected between the cells being formed on the collector component, the collector component having a reduced cross-sectional area at the fusible part; the retaining component is configured to fix the multiple cells at the top and/or bottom of the multiple cells, and a hole open to the outside is provided in the retaining component at a position corresponding to the fusible part, so that the fusible part is exposed.

In one embodiment, the hole is a through-hole or a blind hole.

In one embodiment, the hole is a blind hole, wherein a bottom wall of the blind hole is a flat surface, and the centre of the bottom wall and the fusible part are adjacent to each other or separated by a gap.

In one embodiment, a bottom wall of the blind hole is a curved surface with a raised centre and a sunken periphery, and the centre of the bottom wall and the fusible part are adjacent to each other or separated by a gap.

In one embodiment, a bottom wall of the blind hole is a curved surface with a sunken centre and a raised periphery, so that the fusible part is supported by opposite edges of the bottom wall.

According to a second aspect of the present invention, a battery assembly is provided, comprising:
multiple cells, arranged in parallel in an axial direction;
collector components located at the top and bottom of the multiple cells, with a fusible part formed on the collector component, the collector component having a reduced cross-sectional area at the fusible part; and
the retaining component according to any one of the above solutions.

In one embodiment, the multiple cells are arranged as multiple cell strings, with all of the cells in each of the cell strings being arranged in series connection in a longitudinal direction, and the multiple cell strings being arranged in parallel connection in a transverse direction, the fusible part being formed between each pair of adjacent cell strings, wherein the longitudinal direction, the transverse direction and a height direction are mutually orthogonal.

In one embodiment, the collector components are a plurality, each collector component comprising multiple electrically conductive contact parts in electrically conductive contact with the multiple cell strings in one-to-one correspondence, the fusible part being formed between each pair of adjacent said electrically conductive contact parts, and preferably, each of the electrically conductive contact parts being in electrically conductive contact with one or two cells in the corresponding cell string.

In one embodiment, cells of adjacent cell strings are offset in the transverse direction.

In one embodiment, the collector component and the retaining component are integrally moulded.

According to a third aspect of the present invention, an end structure for a battery assembly is provided, the battery assembly comprising multiple cells arranged side by side in parallel in an axial direction; the end structure is positioned at the top or bottom of the multiple cells, and comprises a retaining component and a collector component which are integrated as a single body, wherein:
the collector component is in electrically conductive contact with at least two cells, and a fusible part located between the cells is formed on the collector component, the collector component having a reduced cross-sectional area at the fusible part;
the retaining component is configured to fix the multiple cells, and a hole open to the outside is provided in the retaining component at a position corresponding to the fusible part, so that the fusible part is exposed.

In one embodiment, the hole is a through-hole or a blind hole.

In one embodiment, the hole is a blind hole, wherein a bottom wall of the blind hole is a flat surface, and the centre of the bottom wall and the fusible part are adjacent to each other or separated by a gap.

In one embodiment, a bottom wall of the blind hole is a curved surface with a raised centre and a sunken periphery, and the centre of the bottom wall and the fusible part are adjacent to each other or separated by a gap.

In one embodiment, a bottom wall of the blind hole is a curved surface with a sunken centre and a raised periphery, so that the fusible part is supported by opposite edges of the bottom wall.

### Brief Description of the Figures

In order to gain a better understanding of the above-described and other objectives, features, advantages and functions of the present invention, reference may be made to the preferred embodiments shown in the drawings. In the drawings, identical reference numerals denote identical components. Those skilled in the art will understand that the drawings are intended to schematically illustrate preferred embodiments of the present invention, without imposing any restrictions on the scope of the present invention, and that the components in the drawings are not drawn to scale.
Fig. 1 is a schematic drawing of a battery assembly according to some preferred embodiments of the present invention.
Fig. 2 is a schematic drawing of the interior structure of a battery assembly according to other preferred embodiments of the present invention.
Fig. 3 is a schematic drawing of the top retaining component, heat dissipating means and cells in Fig. 2, in assembled form.
Fig. 4 is an individual schematic drawing of one spacing component in Fig. 3.
Fig. 5 is a schematic drawing of Fig. 2, viewed from above.
Fig. 6 is a schematic drawing with the top retaining component of one cell region in Fig. 2 removed.
Fig. 7 is an individual schematic drawing of one collector component shown in Fig. 6.
Fig. 8 is a partial enlarged drawing of part A in Fig. 5.
Fig. 9 is an enlarged schematic drawing of one fusible part hole in Fig. 8.
Fig. 10A is a schematic sectional drawing of Fig. 9, taken along line B-B.
Figs. 10B - 10E are alternative embodiments to Fig. 10A.
Fig. 11A is a schematic drawing of an end structure according to an embodiment of the present invention, viewed from above.
Fig. 11B is a schematic drawing of an end structure according to an embodiment of the present invention, viewed from below.

### Reference labels:

100 Battery assembly
101 Casing
102 Handle part
103 Window
620, 620a, 620b, 620c, 620d, 620e Retaining component
670 Heat dissipating means
650 Cell
660 Collector component
640 Circuit transmission plate
670a, 670b Plastic reduction hole
651, 652 Cell region
661 Collector component main body
6611 Electrically conductive contact part
662, 662a, 662b, 662c, 662d, 662e Fusible part
622, 622a, 622b, 622c, 622d, 622e First hole
621 Second hole
6221, 6221a, 6221b, 6221c, 6221d, 6221e Bottom wall of first hole
6222 Sidewall of first hole

### Detailed Description of the Invention

Specific embodiments of the present invention are now described in detail with reference to the drawings. The embodiments described here are merely preferred embodiments according to the present invention; those skilled in the art will be able to think of other ways of implementing the present invention based on these preferred embodiments, and these other ways likewise fall within the scope of the present invention.

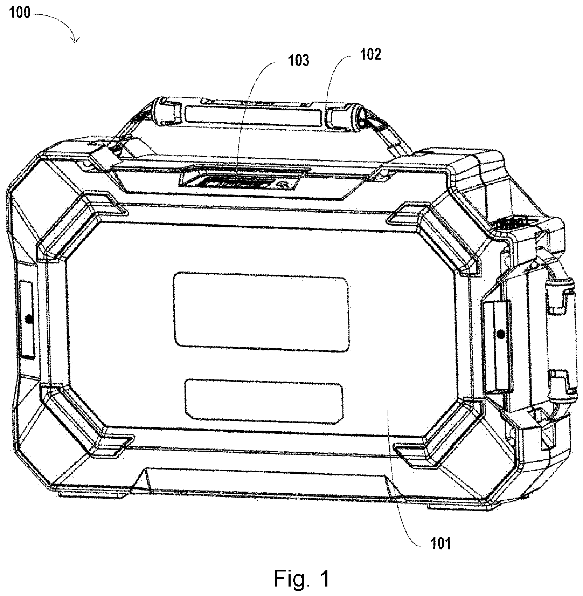

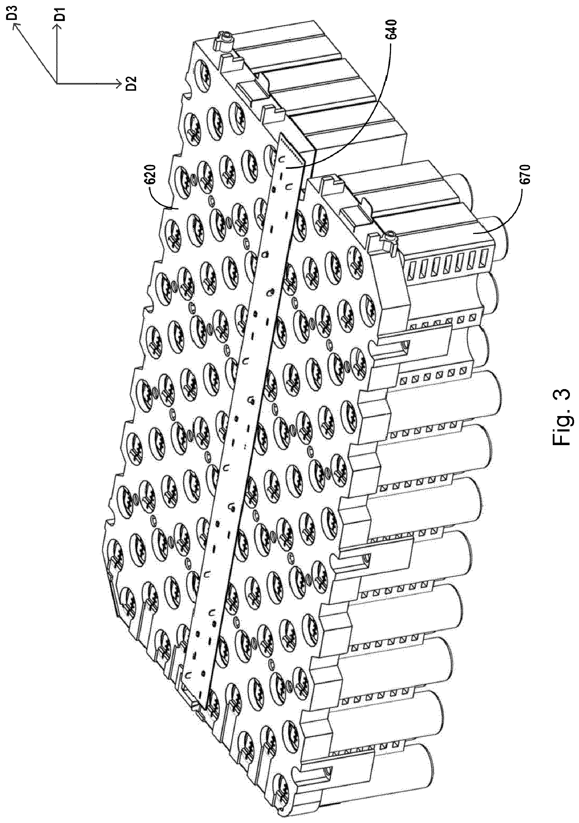

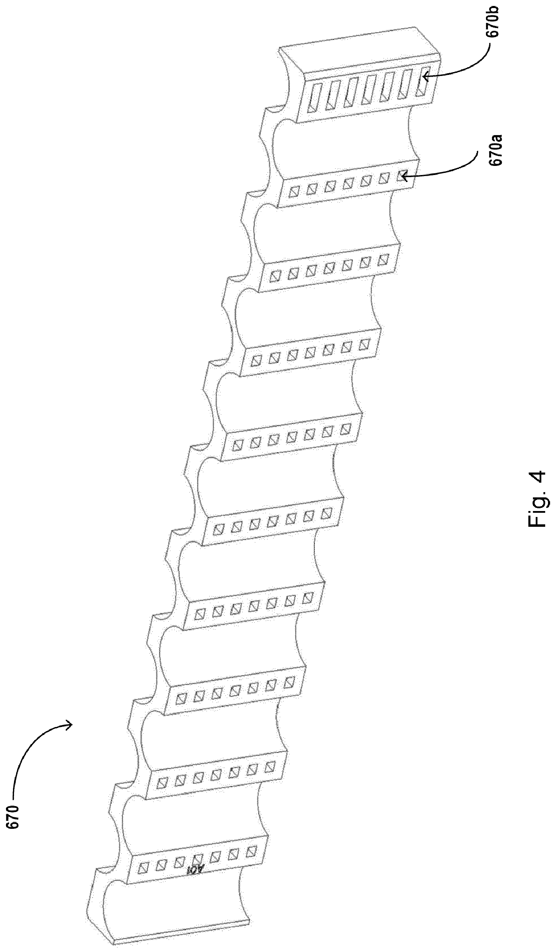

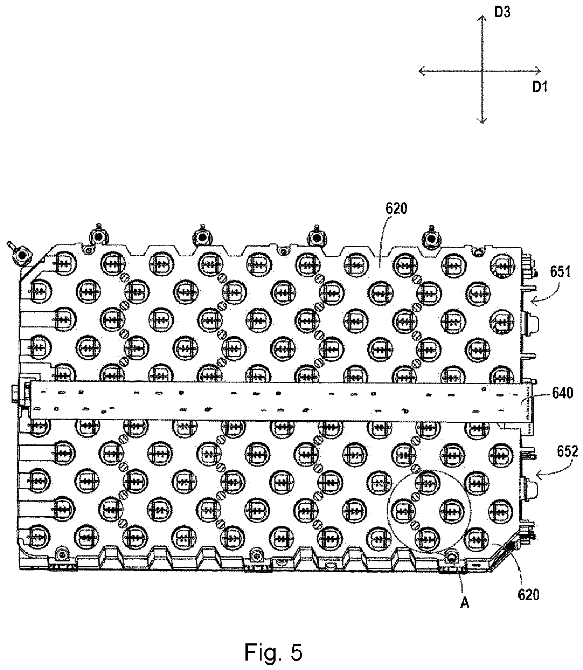

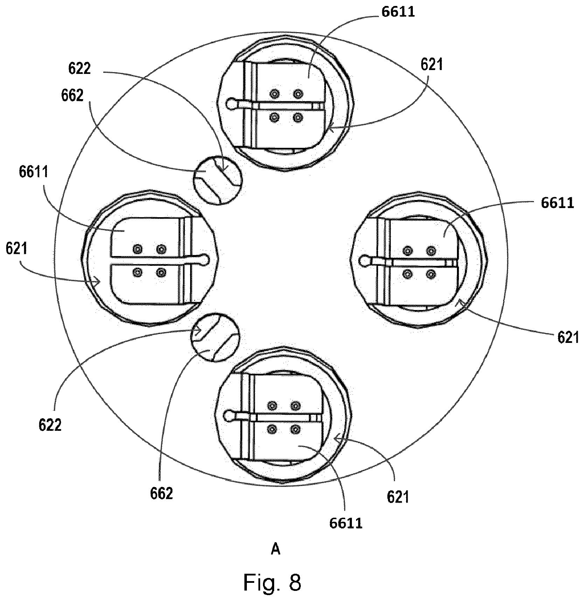

Figs. 1 - 11B show some preferred embodiments of a heat dissipating means, a retaining means, a battery assembly, a cell end structure and a working machine, etc. according to the present invention. First of all, it must be explained that directional and positional terms in the present invention should be understood to mean relative directions and positions, not absolute directions and positions. The directional and positional terms in the present invention may be explained with reference to the exemplary structures shown in Figs. 1 - 11B. For example, the height direction of the cell as mentioned in the present invention may be understood to be direction D2 in Figs. 1 - 11B, "longitudinal direction" may be understood to be direction D1 in Figs. 1 - 11B, and "transverse direction" may be understood to be direction D3 in Figs. 1 - 11B, wherein directions D1, D2 and D3 are orthogonal in space. The top and bottom of the cell as mentioned in the present invention may be understood to be two ends in the height direction of the cell.

Fig. 1 shows a schematic drawing of the exterior of a battery assembly in some embodiments. The battery assembly 100 comprises a casing 101 which is substantially a cuboid, and may also for example comprise a handle part 102 and a window 103 for displaying the remaining charge level. The interior of the casing 101 of the battery assembly 100 may have a variety of different structures.

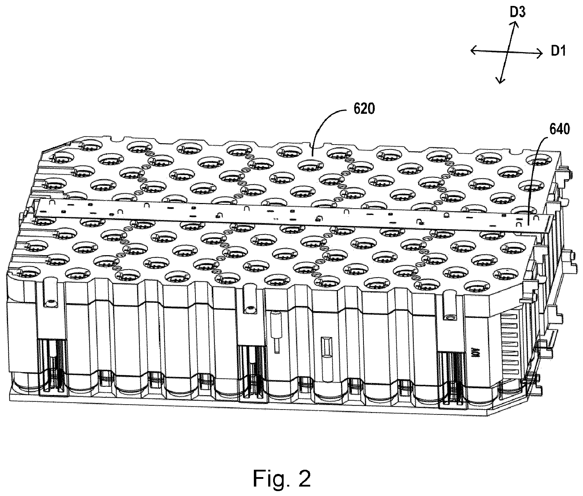

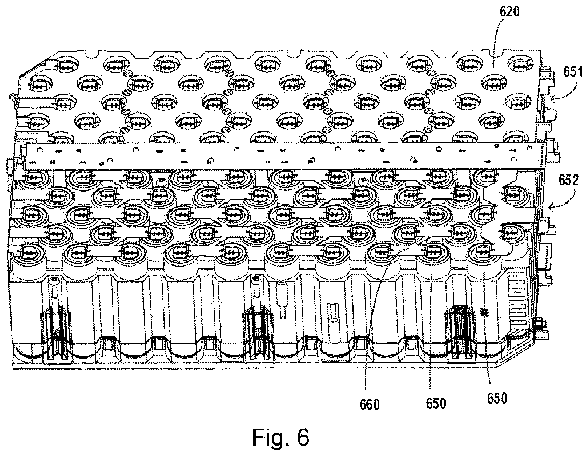

Figs. 2 - 11B are some preferred embodiments according to the interior structure of the battery assembly 100. The battery assembly 100 may comprise multiple cells 650 arranged side by side in parallel in an axial direction (see Fig. 6), and retaining components 620 located at the top and bottom of the multiple cells 650, the retaining components 620 being used to fix the multiple cells 650. Preferably, a heat dissipating means made of a material with a higher thermal conductivity than air is provided between adjacent cells 650; the heat dissipating means 670 may be provided with weight reduction holes. The weight reduction holes for example comprise rectangular openings 670b, located at longitudinal ends of the heat dissipating means 670 and extending in the longitudinal direction D1, or square openings 670a located at positions closer to the centre in the longitudinal direction of the heat dissipating means. The openings 670a, 670b are plastic reduction holes, which can reduce the weight of the battery assembly as well as the cost of material.

Referring to Fig. 6, collector components 660 are provided at the top and bottom of the cells 650, the collector components 660 being in electrically conductive connection with circuit transmission plates 640. Specifically, the multiple cells may be divided into two cell regions, i.e. regions 651 and 652. For example, in region 651, the polarities of the tops of adjacent cells in the longitudinal direction D1 may be opposite, e.g. the top of one cell is a positive pole, while the top of the other cell is a negative pole. Similarly, the cells may be arranged in the same way or a similar way in region 652. The circuit transmission plate 640 is located between regions 651 and 652.

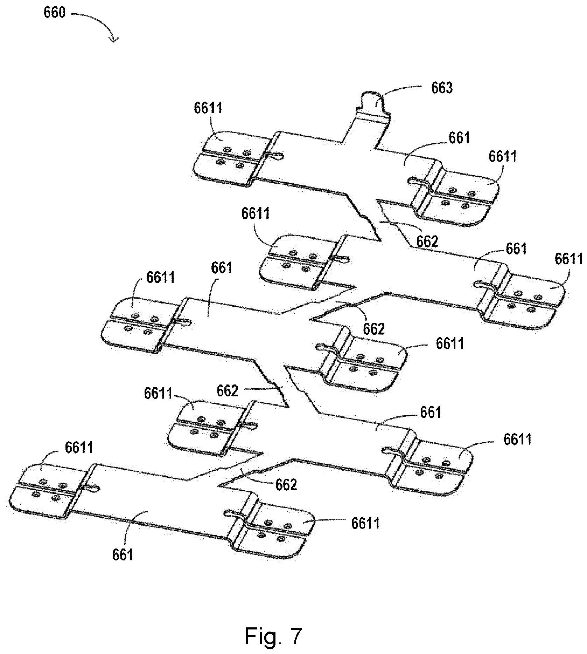

The cells 650 are arranged in multiple cell strings, with all of the cells 650 in each cell string being arranged in series connection in the longitudinal direction D1, and the multiple cell strings being arranged in parallel connection in the transverse direction D3. Referring to Figs. 6 and 7, corresponding to the cells 650 arranged in this way, the collector components 660 are also configured to be a plurality, each collector component 660 comprising multiple collector component main bodies 661 in one-to-one correspondence with multiple cell strings, each collector component main body 661 being provided with an electrically conductive contact part 6611 in electrically conductive contact with a cell 650, with a fusible part 662 formed between each pair of adjacent collector component main bodies 661. Preferably, each collector component main body 661 is in electrically conductive contact with one or two cells 650 in the corresponding cell string; in the collector component 660 shown in Fig. 7, each collector component main body 661 has two electrically conductive contact parts 6611, whereas in the collector component 660 located at a longitudinal end as shown in Fig. 6, each collector component main body 661 has only one electrically conductive contact part 6611. Since the cells 650 of adjacent cell strings are offset in the transverse direction D3, the fusible parts 662 connected between adjacent collector component main bodies 661 do not extend exactly in the transverse direction D3, being slightly oblique relative to the transverse direction D3. Each collector component 660 also has an output port 663 for outputting collected current to the circuit transmission plate 640.

It will be understood that the fusible part 662 is positioned between adjacent cell strings, i.e. disposed between parallel-connected cells 650. The collector component 660 has a reduced cross-sectional area at the fusible part 662, so that the fusible part 662 can be used as a fuse. For example, the fusible part 662 may have the same thickness as other parts of the collector component 660, but the width at the fusible part 662 is smaller. Alternatively, the fusible part 662 may have the same width as a part adjacent thereto, but a smaller thickness than the part adjacent thereto. Those skilled in the art will understand that the reduced width at the fusible part 662 may be achieved by means of reduced parts at two sides as in Fig. 7, or by means of reduced parts at only one side, or by providing a through-hole in the fusible part. Continuing to refer to Figs. 2 - 9, a hole 622 open to the outside is provided in the retaining component 620 at a position corresponding to the fusible part 662, so that the fusible part 662 is positioned in the hole 622. When melt-through occurs due to current flow through the fusible part 662 of the collector component, the structure of the opening allows the fusible part 662 to melt through fully, thereby protecting the circuit.

It will be understood that the fusible part may also be disposed between series-connected cells. When the current in the series connection is too high, the fusible part can melt through to break the current circuit, thereby protecting the cells. To summarize, the fusible part may be disposed at any desired position in the entire circuit.

Further, it can also be seen from Figs. 2-9 that the retaining component 620 is also provided with a hole 621 for exposing the electrically conductive contact part on the collector component 660. For convenience of description, the hole 622 in the retaining component 620 for exposing the fusible part 662 is called a first hole, and the hole 621 in the retaining component 620 for exposing the electrically conductive contact part on the collector component 660 is called a second hole. The first hole 622 and second hole 621 may both be round holes, and the diameter of the first hole 622 may be larger than the diameter of the second hole 621.

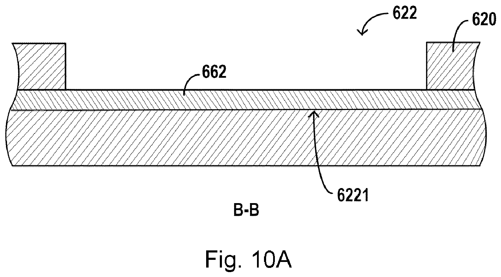

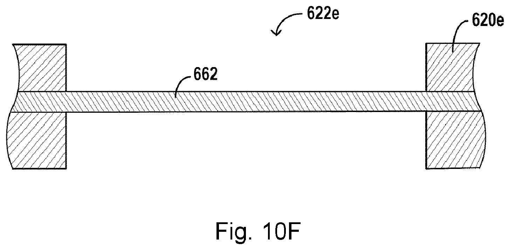

The bottom of the electrically conductive contact part must be in electrically conductive contact with the cell 650, so the second hole 621 is generally configured as a through-hole. The first hole 622 may be configured as a blind hole or a through-hole. Figs. 10A - 10F show several embodiments with different forms of the first hole 622. The first holes 622 in Figs. 10A - 10E are blind holes; the first hole 622 in Fig. 10F is a through-hole. When the first hole is a blind hole, the blind hole can also prevent the problem of short circuits that might be caused by molten metal falling into the interior of the battery pack.

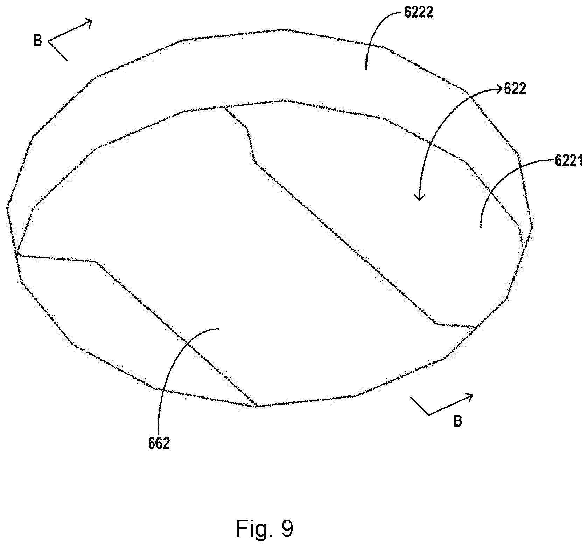

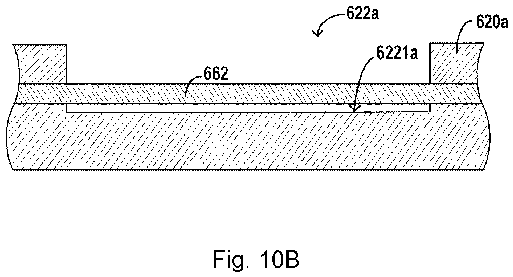

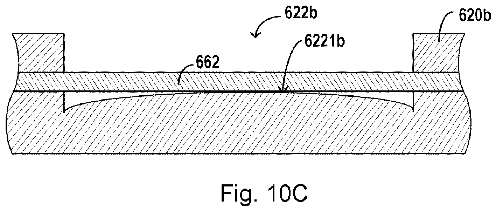

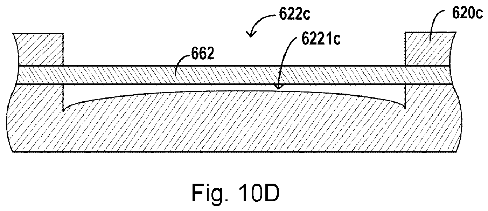

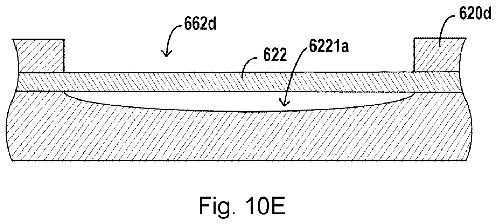

In the embodiment shown in Fig. 10A for example, the first hole 622 of the retaining component 620 is defined by a bottom wall 6221 and a sidewall 6222 (see Fig. 9), the bottom wall 6221 being a flat surface, and the fusible part 662 lying against the bottom wall 6221 of the first hole 622; such a configuration is quite simple, and convenient to produce and manufacture. In the embodiment shown in Fig. 10B for example, the bottom wall 6221a of the first hole 622a defined by the retaining component 620 is a flat surface, and there is a gap between the fusible part 662a and the bottom wall 6221a of the first hole 622a, with the fusible part 662a being suspended in mid-air; such a configuration can make it easier for the fusible part 662a to fully melt through when the fusible part 662a overheats. In the embodiment shown in Fig. 10C for example, the bottom wall 6221b of the first hole 622b defined by the retaining component 620b is a curved surface with a raised centre and a sunken periphery, the centre of the bottom wall 6221b being in contact with the fusible part 662b; the bottom wall 6221b forming the curved surface allows melt-through residue to flow along the curved surface to the peripheral edges of the bottom wall 6221b when the fusible part 662b melts through, preventing the residue from solidifying together again after melt-through. In the embodiment shown in Fig. 10D for example, the bottom wall 6221c of the first hole 622c defined by the retaining component 620c is a curved surface with a raised centre and a sunken periphery, and there is a gap between the fusible part 662c and the bottom wall 6221c of the first hole 622c, with the fusible part 662c being suspended in mid-air; such a configuration can make it easier for the fusible part 662c to fully melt through when the fusible part 662c overheats, and also allows melt-through residue to flow along the curved surface to the peripheral edges of the bottom wall 6221c when the fusible part 662c melts through, preventing the residue from solidifying together again after melt-through. In the embodiment shown in Fig. 10E for example, the bottom wall 6221d of the first hole 622d defined by the retaining component 620d is a curved surface with a sunken centre, and the fusible part 662d is set up between opposite edges of the bottom wall 6221d, thus being suspended in mid-air; such a configuration of suspension in mid-air is more stable. In the embodiment shown in Fig. 10F for example, the first hole 622e defined by the retaining component 620e is a through-hole, and the fusible part 662e is suspended in mid-air; such a configuration can make it easier for the fusible part 662e to fully melt through when the fusible part 662e overheats.

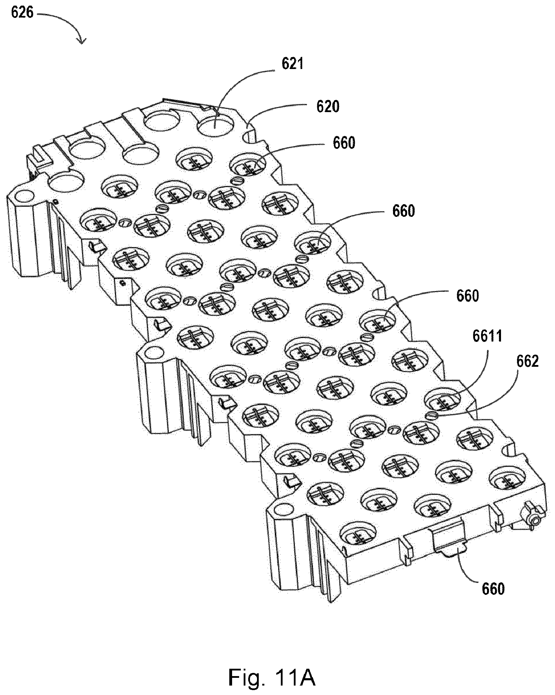

In some embodiments, the collector component 660 and the retaining component 620 are integrally moulded; for example, the combination of these two components may be called an end structure 626 for a battery assembly. It will be understood that the end structure 626, in addition to comprising the collector component 660 and the retaining component 620, may further comprise other structures. Figs. 11A - 11B show separate schematic drawings of the end structure 626 viewed from above and below; parts of the collector component 660 have been omitted in the figures, so that the structure of the second hole 621 configured as a through-hole is shown clearly.

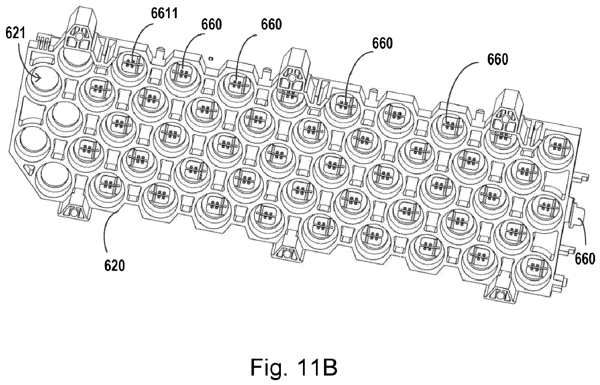

Referring to Figs. 11A - 11B, the retaining component 620 may for example be made of plastic; the collector component 660 is made of a metal such as copper, and the collector component 660 is partially enclosed in the retaining component 620. The retaining component 620 is provided with the first holes 622 for exposing the fusible parts 662 of the collector components 660, and the second holes 621 for exposing the electrically conductive contact parts 6611 of the collector components 660. Referring to Fig. 11B, the second holes 621 of the retaining component 620 are in fact used to receive top ends of multiple cells 650; when the cells 650 are correctly received in the second holes 621, the electrically conductive contact parts of the collector component 660 are precisely in electrically conductive contact with the top ends of the cells 650. In production, the end structure 626 comprising the collector component 660 and the retaining component 620 may be integrally moulded first, then the end structure 626 may be fitted to the cells 650.

Other specific structures of the collector component and retaining component have been recorded in embodiments above, so are not described again here. It will be understood that in embodiments of the present invention, all descriptions relating to the retaining component and/or the collector component should be understood to be embodiments of the end structure of the present invention.

Most of the embodiments of the present invention have been explained by taking the retaining component and collector component located at the top of the cells as an example, but it will be understood that the retaining component and collector component located at the bottom of the cells have a similar structure.

It must be explained that the above-described embodiments of the present invention may be combined and/or modified in various ways, and the results of such combinations and/or modifications should also be regarded as embodiments of the present invention.

In the present invention, the retaining component is provided with openings corresponding to the fusible parts of the collector component, so that the fusible parts can be exposed to the outside at the openings; this provides space for melt-through of the fusible parts, thus allowing the fusible parts to melt through fully to protect the circuit when melt-through occurs due to current flow through the fusible parts of the collector component.

The above description of various embodiments of the present invention is provided to a person skilled in the art for descriptive purposes. The present invention is not intended to be exclusive or limited to a single disclosed embodiment. Based on the above, a person skilled in the art as taught above will understand various substitutes for and variants of the present invention. Thus, although some alternative embodiments have been described specifically, those skilled in the art will understand or develop with relative ease other embodiments. The present invention is intended to include all substitutes for, alterations to, and variants of the present invention described herein, as well as other embodiments falling within the spirit and scope of the present invention described above.

## Claims

1. Retaining component (620) for a battery assembly, the battery assembly comprising multiple cells (650) and a collector component (660) positioned at the top and/or bottom of the multiple cells, a fusible part (662) connected between the cells being formed on the collector component, the collector component having a reduced cross-sectional area at the fusible part, **characterized in that** the retaining component is configured to fix the multiple cells at the top and/or bottom of the multiple cells, and a hole (622) open to the outside is provided in the retaining component at a position corresponding to the fusible part, so that the fusible part is exposed.

2. Retaining component according to Claim 1, **characterized in that** the hole is a through-hole (622e) or a blind hole (622, 622a, 622b, 622c, 622d).

3. Retaining component according to Claim 1, **characterized in that** the hole is a blind hole, wherein a bottom wall (6221, 6221a) of the blind hole is a flat surface, and the flat surface and the fusible part are adjacent to each other or separated by a gap.

4. Retaining component according to Claim 1, **characterized in that** the hole is a blind hole, wherein a bottom wall (6221b, 6221c) of the blind hole is a curved surface with a raised centre and a sunken periphery, and the centre of the bottom wall and the fusible part are adjacent to each other or separated by a gap.

5. Retaining component according to Claim 1, **characterized in that** the hole is a blind hole, wherein a bottom wall (6221d) of the blind hole is a curved surface with a sunken centre and a raised periphery, so that the fusible part is supported by opposite edges of the bottom wall.

6. Battery assembly, **characterized in that** the battery assembly comprises:
multiple cells (650);
collector components (660) located at the top and bottom of the multiple cells, with a fusible part (662) formed on the collector component, the collector component having a reduced cross-sectional area at the fusible part; and
the retaining component (620) according to any one of Claims 1 - 5.

7. Battery assembly according to Claim 6, **characterized in that** the multiple cells are arranged as multiple cell strings, with all of the cells in each of the cell strings being arranged in series connection in a longitudinal direction (D1) of the battery assembly, and the multiple cell strings being arranged in parallel connection in a transverse direction (D3) of the battery assembly, the fusible part being formed between each pair of adjacent cell strings, wherein the longitudinal direction, the transverse direction and a height direction of the cells are mutually orthogonal.

8. Battery assembly according to Claim 7, **characterized in that** the collector components are a plurality, each collector component (660) comprising multiple electrically conductive contact parts (6611) in electrically conductive contact with the multiple cell strings in one-to-one correspondence, the fusible part being formed between each pair of adjacent said electrically conductive contact parts, and preferably, each of the electrically conductive contact parts being in electrically conductive contact with one or two cells in the corresponding cell string.

9. Battery assembly according to Claim 7 or 8, **characterized in that** cells of adjacent cell strings are offset in the transverse direction.

10. Battery assembly according to any one of Claims 6-9, **characterized in that** the collector component (660) and the retaining component (620) are integrally moulded.

11. End structure (626) for a battery assembly, the battery assembly comprising multiple cells arranged side by side in parallel in an axial direction, **characterized in that** the end structure is positioned at the top or bottom of the multiple cells, and comprises a collector component (660) and a retaining component (620) which are integrated as a single body, wherein:
the collector component (660) is in electrically conductive contact with at least two cells, and a fusible part (662) located between the cells is formed on the collector component, the collector component having a reduced cross-sectional area at the fusible part;
the retaining component (620) is configured to fix the multiple cells, and a hole (622) open to the outside is provided in the retaining component at a position corresponding to the fusible part, so that the fusible part is exposed.

12. End structure (626) according to Claim 11, **characterized in that** the hole is a through-hole (622e) or a blind hole (622, 622a, 622b, 622c, 622d).

13. End structure (626) according to Claim 11, **characterized in that** the hole is a blind hole, wherein a bottom wall (6221, 6221a) of the blind hole is a flat surface, and the flat surface and the fusible part are adjacent to each other or separated by a gap.

14. End structure (626) according to Claim 11, **characterized in that** the hole is a blind hole, wherein a bottom wall (6221b, 6221c) of the blind hole is a curved surface with a raised centre and a sunken periphery, and preferably, the centre of the bottom wall and the fusible part are adjacent to each other or separated by a gap.

15. End structure (626) according to Claim 11, **characterized in that** the hole is a blind hole, wherein a bottom wall (6221d) of the blind hole is a curved surface with a sunken centre and a raised periphery, so that the fusible part is supported by opposite edges of the bottom wall.
